# EUROPEAN PATENT SPECIFICATION

(11) **EP 3 977 213 B1**
(45) Date of publication and mention of the grant of the patent: **14.06.2023**
(21) Application number: 20728090.0
(22) Date of filing: 01.06.2020
(51) Int. Cl.: G05B 13/02, G05B 19/418, B27N 1/00

(54) **METHOD AND SYSTEM FOR CONTROLLING FIBRE MOISTURE CONTENT IN A FIBREBOARD MANUFACTURING PROCESS**
VERFAHREN UND SYSTEM ZUR STEUERUNG DES FASERFEUCHTIGKEITSGEHALTS IN EINEM FASERPLATTENHERSTELLUNGSVERFAHREN
PROCÉDÉ ET SYSTÈME DE RÉGLAGE DE LA TENEUR EN HUMIDITÉ DE FIBRES DANS UN PROCESSUS DE FABRICATION DE PANNEAUX DE FIBRES

(30) Priority: 30.05.2019 EP 19382440
(43) Date of publication of application: 06.04.2022
(73) Proprietor: Financiera Maderera, S.A., 15770 Santiago de Compostela (ES)
(72) Inventor: MERA PÉREZ, David, 15782 Santiago de Compostela (ES); COTOS YÁÑEZ, José Manuel, 15782 Santiago de Compostela (ES); GÓMEZ TATO, Andrés, 15705 Santiago de Compostela (ES); VIDAL FRANCO, José Ignacio, 15705 Santiago de Compostela (ES); MOURIÑO GALLEGO, José Carlos, 15705 Santiago de Compostela (ES); RECAMÁN GONZÁLEZ, Santiago, 36119 Campo Lameiro, Pontevedra (ES); GONZÁLEZ PICHEL, José, 15688 Sigüeiro - Oroso A Coruña (ES); MARTÍNEZ PÉREZ, José Alberto, 32002 Orense (ES)
(74) Representative: Balder IP Law, S.L.
(86) International application number: PCT/EP2020/065126
(87) International publication number: WO 2020/240039

(56) References cited:
- US-A- 5 121 467
- US-A1- 2007 005 525

## Description

### TECHNICAL FIELD

The present disclosure generally relates to a method and a system for controlling fibre moisture content in a fibreboard manufacturing process, and more specifically, for controlling the fibre moisture content at the output of a drying stage of the fibreboard manufacturing process. The fibreboard manufacturing process may be adapted to manufacture any kind of engineered wood product that is made out of wood fibres, such as low-density fibreboard (LDF), medium-density fibreboard (MDF), and hardboard or high-density fibreboard (HDF), and may be carried out by subjecting the wood to a set of sequential stages comprising a chipping stage, a defibrating stage, a gluing stage in which fibres are mixed with a binding agent, a drying stage, a cleaning stage and a forming stage in which the resulting fibre mat is hot pressed and cut in boards.

### BACKGROUND OF THE DISCLOSURE

The process of obtaining glued fibre for the manufacture of engineered wood products, such as LDF, MDF or HDF, may be composed of a set of sequential phases that, starting from the wood trunk (e.g., pine, poplar or eucalyptus trunks, among others) as the fundamental raw material generates the glued fibre with the desired moisture at the end of it. The moisture of the fibre (measured as the percentage of water mass in relation to the completely dry wood) may be controlled within narrow margins that depend on the product to be manufactured, but that generally is within the range of 9-14%.

The fibreboard manufacturing process may comprise a first stage (chipping stage) in which the trunks are debarked and stripped in a chipper drum which reduces the logs into evenly shaped chips. The moisture of the chips is measured with a moisture sensor on wet basis. The moisture sensors generally determine the volumetric water content in the chips by measuring some property of the wood, such as electrical resistance, dielectric constant or by measuring reflection of emitted electromagnetic signals. The measured moisture can be converted into a measure on dry basis (representing the final moisture amount in the wood fibre) through an adjustment to a third-grade polynomial.

A second stage (defibrating stage) of the fibreboard manufacturing process may comprise introducing the chips into a digester through, e.g., a squeezing screw that extracts part of the moisture contained in the chips. Prior to the introduction of chips into the digester, the wood chips may be transported to a hopper where they are preheated with, for example, steam (e.g., at 80-90°C). This pre-heating stage reduces the hardness of the chips such they are easy to squeeze by the squeezing screw.

Then, the chips can be cooked in the digester by adding steam. The duration of this digestion step may be critical from the point of view of quality since as excessive duration can lead to blackening and a too short time can lead to a low-quality product with excessively large fibres. Then, the chips may be introduced in the defibrator by an extraction screw whose operational speed (rpm) determines the factory production rate. The defibrator defibrates the chips to form the fibre. The defibrator comprises two parallel discs where the chips are defibrated. The separation of the discs can be varied to control the quality (final size) of the obtained fibre.

At a third stage (mixing or gluing stage) of the fibreboard manufacturing process, the resulting fibre may pass at very high speed and very high temperature through the blowline where it is mixed with resin or glue, among other products, that is introduced in a nebulized form. The formulation of the resin or glue may be different depending on the final product. At this stage of the process, pigments and/or dies can be added to generate different products such as coloured MDF.

At a fourth stage (drying stage) of the fibreboard manufacturing process, the glued fibre is dried. The drying stage may be composed of a variable number of drying steps, generally one or two drying steps. In a drying stage including two drying steps, the first drying step may comprise pushing the fibre up to the top of a cyclone with hot air generated by different boilers, generators, or similar. This first drying step removes most of the moisture from the fibres. Upon entering the cyclone, the fibre precipitates by gravity while the moisture removed from the fibres is expelled outside by natural convection. Once the fibre has been decanted in the first cyclone through a cyclonic centrifugation process, the fibre may be subjected to a second drying step in a second cycle with a structure similar to the previous one (flash dryer + cyclone). In such second drying step, hot gases are also used to remove more moisture from the fibres, although said gases are at a temperature that is lower than in the first drying step. The fibre, as in the first drying step, precipitates into a second cyclone. Then, at the exit of the second cyclone, the moisture of the fibre may be measured by a moisture sensor providing the amount of moisture in the fibre as a percentage of water on a dry basis.

At a fifth stage (cleaning stage) the fibre is stored in a silo that feeds another silo by means of a pneumatic conveyor through a gravimetric separator. In such silo, glue clumps, fibres with high moisture content due to condensation, larger fibres and other contaminants (plastic waste, rubber, small metals, etc.) are extracted from fibre flow.

At a sixth stage (forming stage) of the fibreboard manufacturing process, the fibre may be conveyed to the fibreboard forming system. The fibreboard forming system may transform the fibre pulp into a fibre mat that is rolled through a series of equipment which produces a fibre mat with controlled weight. A set of edge trimming saws may trim the edges of the fibre mat to give the desired width to the board. The mat is then passed through the hot press to make the strong bonding of the fibres. The fibreboards are weighed on a weighing platform, cooled to room temperature in a, for example, star cooler, and then stacked on a platform.

The drying stage in the fibreboard manufacturing process is a highly non-linear process consisting of several distinct steps in which a high interrelationship between all the parameters participating in drying the fibres exists. In fact, the drying parameters depend also on the previous steps of fibre generation up to the entry point in the dryers. In addition, a slight variation of one of said parameters can cause a large chain of effects in the drying process which could severely affect the quality of the final product.

Current control systems for controlling the moisture content in the fibreboard may include a chain of control loops based on temperature differences which are managed by standard Programmable Logic Controllers (PLCs) or Proportional-Integral-Derivative (PID) controllers placed in different points of the production line. Said control systems try to reach the established operating point for the devices participating in the manufacturing process, such as cyclones, generators, boilers, etc., by evaluating the deviation (error) between the current measured moisture value and the desired moisture value (setpoint) at the output of the drying stage. The control systems may modify some control variables by an amount that may be proportional to the deviation measured. These control systems further take into account not only the current deviation value but also the history of deviations previously measured and the effect that these deviations (current and past) may have through a change ratio. Such control systems may not take into account the modelling of the fibreboard manufacturing process nor the parameters of the fibre production, so such control may not be directly affected by the models or the current fibre production previous steps. Such current control systems are reactive control systems that modify specific parameters of the process or the configuration of the system once the problem has occurred. In addition, these current control systems have little or no ability to anticipate problems and a high inertia which may cause affections in a significant part of the fibre when a problem happens.

Other kind of control systems may be based on Model Predictive Control (MPC) technologies. Such control systems do not manage the drying devices exclusively by using the deviation between the desired moisture value and the measured moisture value, but an additional element is added based on an operating model of the drying devices to be controlled. In fact, an MPC is normally considered to refer to a class of control algorithms that uses an explicit process model to predict the future response of the manufacturing plant. For example, document "Development of a grey model for a medium density fibreboard dryer in ecosimpro (Santos Bartolome P, Pitarch JL, de Prada), 2017" try to create a MPC system based on an analytical model plus some data correction, but which does not take into account the fibre production manufacturing process from debarking to the last step of drying nor the two-step drying process with intermediate cyclone.

Other control systems may implement Data-Driven Control (DDC) technologies. In these cases, control of the parameters associated to the drying stage of the fibreboard manufacturing process are performed exclusively by using current and past data from the drying devices, without using an explicit model of the fibreboard manufacturing system.

Document US2007/005525 A1 describes a system and method for controlling a process with spatially dependent conditions for producing a product with spatially dependent properties, e.g., a web/sheet-based process for producing a web/sheet-based product.

Nevertheless, existing control systems for fibreboard manufacturing processes do not consider all the relevant manufacturing parameters to predict and anticipate manufacturing problems, such as obtaining a low-quality final product due to a high or low moisture content relative to pre-established quality parameters. Therefore, the current challenge in the control of the moisture content at the end of fibreboard manufacturing process is to take into account all the relevant process parameters from the initial debarking step to the final cyclone, so the drying process (in one or several steps combining flash drying tubes with cyclones) can be adjusted efficiently taking into account the current state in the dryers plus the previous information about the fibre production. Because the fibre production process is a chain of complex physical problems, addressing said problems using analytical modelling is almost impossible and, if feasible using detailed physical models, is too slow to be used in a real-time process control.

However, all the above-mentioned problems can be addressed using a neural network approach, where the fibre production manufacturing process from debarking to the last step of drying can be modelled from collected data, and later, this model can be used to control and adjust the fibre drying process. Following this approach, the drying process can be adjusted taking into account any manufacturing process parameter variation.

### DESCRIPTION OF THE INVENTION

In fibreboard manufacturing processes, the moisture of the fibre has a direct relation with the quality and properties of the manufactured boards and therefore, its control and management are a key factor of such processes. The method and system described herein analyse in real time information generated by a set of sensors deployed on the factory and, based on the collected information, is able to generate a prediction of the moisture contained in the fibre at the output of the drying stage of the fibreboard manufacturing process. If the prediction does not fit with the set or reference value, previously set by an operator, the system executes in real time an optimization of some of the parameters of the fibreboard manufacturing process to adjust the current values of said parameters, for example, the input temperatures of the dryers, in order to get an output fibre moisture content close to the reference value.

A first aspect of the invention relates to a moisture content control system for controlling a fibre moisture content in a fibreboard manufacturing process. Such moisture control system comprises a plurality of sensors where each sensor is configured to monitor a respective parameter of the fibreboard manufacturing process. Therefore, the sensors may be deployed in different points of the fibreboard production line to monitor the corresponding parameters. The moisture content control system further comprises a plurality of feedback loop controllers. Each feedback loop controller is configured to adjust a particular parameter of the fibreboard manufacturing process based on a difference between a pre-defined setpoint associated to the particular parameter and a current value of the particular parameter. Each feedback loop controller may be associated to a particular sensor of the plurality of sensors, such that a particular feedback loop controller is configured to adjust the parameter monitored by the sensor the particular feedback loop controller is associated to. The feedback loop controllers may be PIDs.

In addition, the moisture content control system comprises a moisture control unit that is configured to receive a plurality of inputs, said plurality of inputs corresponding to the parameters monitored by the plurality of sensors. The inputs at least comprise a pre-defined setpoint for the fibre moisture content at the output of the drying stage. The moisture control unit is further configured to generate, using a neural network that comprises at least one hidden neural network layer, an estimate or prediction of the fibre moisture content at the output of the drying stage, the neural network using as inputs the monitored parameters (collected by the sensors) of the drying stage and at least one another parameter of a fibreboard manufacturing stage prior to the drying stage. For example, the neural network may use as its inputs, those inputs received from the sensors which are related to parameters of the drying units and other parameters related to the digestion stage and/or the defibrating stage. The moisture control unit is also configured to compare the estimate or prediction generated with the pre-defined setpoint for the fibre moisture content at the output of the drying stage and to modify at least one setpoint associated to a corresponding input drying temperature of a respective drying unit of the fibreboard manufacturing process based on the result of the comparison. Depending on the number of drying units in the fibreboard production line, the moisture control unit may modify one or more of the setpoints associated to the input drying temperatures of the different drying units in the fibreboard production line.

In some examples, the moisture control unit is configured to optimize the at least one setpoint associated to the corresponding input drying temperature by modifying the at least one setpoint within a pre-defined range for the corresponding input drying temperature, which must be large enough to permit the control of the system and low enough to assure that the neural network model can be applied with low uncertainty. For example, the pre-defined range may be +-3°C. To optimize the at least one setpoint, the moisture control unit may minimize the distance (or other defined cost function which includes at least the distance as one term) between the moisture setpoint and the moisture prediction, finding one value associated to the corresponding input drying temperature within the pre-defined range, considering a maximum variation, e.g., +-3°C, of the input temperature with respect to the current measurements of the input drying temperature, and considering that other current measurements of sensors used in the neural network model do not change, which makes this said distance minimum. Since the thermodynamic process in the drying units is governed by the temperature differences between the inlet and the outlet optimizing said modification in the respective setpoints improves efficiency of the drying unit and minimizes variations in the moisture content of the fibre after the drying units.

In such examples, the moisture control unit is further configured to optimize a setpoint associated to a first input drying temperature of a first drying unit and a setpoint associated to a second drying temperature of a second drying unit by modifying the setpoint associated to the first input drying temperature within a first pre-defined range for the first input drying temperature and the setpoint associated to the second input drying temperature within a second pre-defined range for the second input drying temperature. To do that, the moisture control unit may select the combination of input drying temperatures that, being within their respective pre-defined ranges, minimizes the distance between the moisture setpoint and the moisture prediction at the output of the drying stage.

As used herein, the term "neural networks" may refer to machine learning (ML) models that employ one or more layers of nonlinear units to predict an output for a received input. Neural networks may include one or more hidden layers in addition to an input layer and an output layer. The output of each hidden layer is used as input to the next layer in the network, i.e., the next hidden layer or the output layer. Each layer of the network generates an output from a received input in accordance with current values of a respective set of parameters.

For example, the neural network used by the moisture control unit may comprise a plurality of neural elements constituting an input neural network layer, a plurality of neural elements constituting an output neural network layer, a plurality of neural elements constituting at least one hidden (intermediate) neural network layer and connectivity weights connecting said input neural network layer to said output neural network layer. The input neural network layer receives the plurality of inputs collected from the sensors, said plurality of inputs being the measures of the parameters obtained in a specific instant by the sensors that are deployed along the production line in the factory. In particular, the plurality of inputs comprises the values of the parameters measured by the sensors and the measure of moisture of the fibre at the output of the drying stage captured by a physical sensor.

As used herein, the term "moisture control unit" may refer to data processing hardware and encompass all kinds of apparatus, devices, and machines for processing data, including by way of example a programmable processor, a computer, or multiple processors or computers. The moisture control unit can also be, or further include, special purpose logic circuitry, e.g., an FPGA (Field Programmable Gate Array) or an ASIC (Application Specific Integrated Circuit). The moisture control unit may optionally include, in addition to hardware, code that creates an execution environment for computer programs, e.g., code that constitutes processor firmware, a protocol stack, a database management system, an operating system, or a combination of one or more of them.

In some examples, the moisture control unit is configured to receive a policy that comprises a set of pre-processing actions and a set of error assignation rules for the inputs. This policy can be applied by the moisture control unit to the plurality of received inputs, coined as case. To this case, the moisture control unit assigns an error code "OK" (which is represented numerically as 99). Each error assignation rule is applied to a particular input or a subset of inputs of this case and the moisture control unit is configured to assign a numerical code to the case based on the corresponding error assignation rule. For example, an error assignation rule can comprise a first range and a second range for the particular input. The first range may correspond to parameter values having no operational interest while the second range may correspond to parameter values having operational interest and thus, being valid values. In such examples, when the parameter associated to the particular input is within the first range, the moisture control unit is configured to assign a specific numerical error code to the particular case between 0 and 98 depending on the severity of the error if such specific numerical error is lower than the current stored numerical error for the particular case. When the parameter associated to the particular input is within the second range, the error code assigned to this particular case is not changed. After executing all the error assignation rules in the policy, if the case has a numerical code different of "OK", the case is marked as "Error" if the numerical value of the error code of the case is between 0 and 49, and as "Warning" if the value is between 50 and 98.

In such examples, when one case composed of the plurality of inputs is associated to an "Error" code, the moisture control unit is configured to discard the plurality of inputs received and inform an operator of the impossibility of generating the prediction. Only when the case is associated to an "OK" or "Warning" code, the moisture control unit is configured to make the prediction and associate the said error code for the case to the generated prediction.

In some examples, after applying the error-filtering rules, each pre-processing action is applied to a particular input of the plurality of inputs in order to normalize the inputs. The inputs may refer to parameters with very different scale values (e.g. pressure difference [-1,1] bar, temperature [50,200] °C). By normalizing the plurality of inputs, these values which could be measured on different scales are transformed to a notionally common scale. By way of example, the pre-processing actions may transform a set of measures into another in which the mean of the values is 0 and their standard deviation is 1. The normalization process is done for each parameter independently from each other.

In some examples, the feedback loop controllers associated to the sensors monitoring the different input drying temperatures of the drying units are configured to adjust at least one of the input drying temperatures of the corresponding drying units based on the difference between the modified setpoints and the current values of the corresponding input drying temperatures. More preferably, the feedback loop controllers associated to the first input drying temperature and to the second input drying temperature are configured to adjust the first input drying temperature and the second input drying temperature based on the difference between the modified setpoint and the current value of the first input drying temperature and the second input drying temperature, respectively.

In some examples, the moisture control unit is configured to optimize at least one of the setpoints associated to a first input drying temperature of the first drying unit and the setpoint associated to the second input drying temperature of the second drying unit based on the result of the comparison between the current moisture fibre content setpoint and the predicted moisture content using said input temperatures and on at least one additional parameter. Preferably, the at least one additional parameter may be the distance between a pre-defined energy distribution between the first drying unit and the second drying unit and the current predicted value for this energy distribution.

In some examples, the moisture control unit is further configured to select a subset of inputs of the plurality of inputs and generate the estimate or prediction of the fibre moisture content at the output of the drying stage based on the subset of inputs. This subset of inputs may be selected based on how relevant the parameters associated to the inputs are for obtaining the prediction. Reducing the number of inputs used to generate the prediction, reduce time for training the neural network, reduce prediction generation times, avoid the curse of dimensionality, etc. The non-selected inputs may be stored in the history but discarded for the prediction process.

In some examples, the neural network may be a non-lineal regression model such as, a deep neural network or a Support Vector Machine (SVM), among others.

In some examples, the plurality of inputs corresponds to parameters related to the defibrating stage, the gluing stage and the drying stage of the fibreboard manufacturing process. In these three stages, the most relevant manufacturing parameters are generated

A second aspect of the invention relates to a method for controlling moisture content in a fibreboard manufacturing process. The fibreboard manufacturing process comprises at least drying stage of the fibreboard. The method comprising the steps of:
receiving, at a moisture control unit, a plurality of inputs corresponding to parameters related to the fibreboard manufacturing process, the parameters being captured by a plurality of sensors and comprising a current fibre moisture content at an output of a drying stage of the fibreboard manufacturing process and a pre-defined setpoint of the fibre moisture content at the output of the drying stage;
generating, by the moisture control unit and using a neural network that comprises at least one hidden neural network layer, an estimate of the fibre moisture content at the output of the drying stage, the neural network using as inputs the parameters related to the drying stage and at least one another parameter of a fibreboard manufacturing stage prior to the drying stage;
comparing, by the moisture control unit, the estimate with the pre-defined setpoint of the fibre moisture content at the output of the drying stage; and
modifying, by the moisture control unit, a setpoint associated to at least one input drying temperature of a respective drying unit of the fibreboard manufacturing process based on the result of the comparison.

Depending on the number of drying units in the fibreboard manufacturing process, the method may comprise modifying a different number of setpoints associated to different input drying temperatures of the drying units of the fibreboard manufacturing process. For example, when there are two drying units, the method may comprise modifying at least one of a setpoint associated to a first input drying temperature of the first drying unit and a setpoint associated to a second input drying temperature of the second drying unit based on the result of the comparison.

In some examples, the method further comprises optimizing the at least one setpoint associated to a corresponding input drying temperature by modifying the at least one setpoint within a pre-defined range for the corresponding input drying temperature. Thus, the moisture control unit may optimise the distance between the moisture prediction and the setpoint associated to the corresponding input drying temperature within the pre-defined range, e.g., +-3°C. To optimize the at least one setpoint, the moisture control unit may minimize the distance (or other defined cost function which includes at least the distance as one term) between the moisture setpoint and the moisture prediction, finding one value associated to the corresponding input drying temperature within the pre-defined range, considering the maximum variation, e.g., +-3°C, of the input temperature with respect to the current measurements of the input drying temperature, and considering that other current measurements of sensors used in the neural network model do not change, which makes this said distance minimum.

In such examples, and for the case in which the drying stage is formed by two drying units, the method comprises optimizing a setpoint associated to a first input drying temperature of a first drying unit and a setpoint associated to a second drying temperature of a second drying unit by modifying the setpoint associated to the first input drying temperature within a first pre-defined range for the first input drying temperature and the setpoint associated to the second input drying temperature within a second pre-defined range for the second input drying temperature.

In some examples, the feedback loop controllers associated to the sensors monitoring the different input drying temperatures of the drying units of the fibreboard manufacturing process may adjust at least one of the input drying temperatures of the corresponding drying units based on the difference between the modified setpoints and the current values of the corresponding input drying temperatures.

In some examples, the method further comprises adjusting, by a first feedback loop controller associated to the first input drying temperature of a first drying unit, the first input drying temperature the first input drying temperature based on a difference between the modified setpoint associated to the first input drying temperature and a current value of the first input drying temperature. In other words, the first feedback loop controller that is associated to the sensor that monitors the first input drying temperature increase, maintains or decrease the first input drying temperature (by for example instructing the boilers or heaters to modify their output temperature) based on a difference between the modified setpoint and the current value (monitored by the sensor) of the first input drying temperature. Analogously, the method adjusts, by a second feedback loop controller associated to the second input drying temperature of a second drying unit, the second input drying temperature based on a difference between the modified setpoint associated to the second input drying temperature and a current value of the second input drying temperature.

In some examples, the method comprises determining, by the moisture control unit, whether the plurality of inputs received from the plurality of sensors are within respective pre-defined ranges. Those inputs out of the pre-defined ranges may be discarded.

In some examples, the method comprises modifying at least one of the setpoint associated to a first input drying temperature of the first drying unit and the setpoint associated to the second input drying temperature of the second drying unit based on the result of the comparison and on a pre-defined energy distribution between the first drying unit and the second drying unit.

In some examples, the method comprises selecting a subset of inputs of the plurality of inputs and generating the estimate of the fibre moisture content at the output of the drying stage based on the subset of inputs.

In some examples, the method comprises receiving a plurality of inputs that correspond to parameters related to the defibrating stage, the gluing stage and the drying stage of the fibreboard manufacturing process.

In some examples, the prediction generated at a particular instant is compared with a number of fibre moisture content measures previously collected by the sensor located at the output of the drying stage of the fibreboard manufacturing process. Based on said comparison a deviation of the sensor may be determined and the prediction may be calibrated based on the deviation. This calibration of the prediction may be carried out periodically in order to minimize the deviation the sensor located at the output of the drying stage may be introducing in the collected measures.

In some examples, the method is executed periodically at particular time intervals. For example, the method may be executed at a time interval of a few seconds, e.g. every 7 seconds. In this way, the feedback loop controller have time enough to modify the input drying temperatures before a new prediction is triggered by the system.

In some examples, the method is performed in real time. Therefore, for each set of inputs collected at a particular instant, an estimation or prediction is generated and based on said estimation, the methods and the apparatuses may control some of the parameters of the fibreboard manufacturing process to adjust the measured moisture content at the output of the drying stage of the fibreboard manufacturing process to the desired moisture content (setpoint), all this being carried out in real time.

While the present method and system is mainly focused on modifying the inlet temperature of the drying units in order to control the fibre moisture content at the output of the drying stage of the fibreboard manufacturing process, the method and system herein described may modify any other parameter (or combination of parameters) of the fibreboard manufacturing process, such as the rpms of the screw feeding the digestor, etc., in order to control said fibre moisture content at the output of the drying stage

### BRIEF DESCRIPTION OF THE DRAWINGS

In order to complement the description and with the aim of aiding a better understanding of the characteristics of the invention, in accordance with a practical exemplary embodiment of the same, a set of figures are attached as an integral part of the description, in which the following is depicted in an illustrative and non-limiting manner:
Figure 1 shows a flow diagram of an example method for controlling moisture content in a fibreboard manufacturing process.
Figure 2 shows a flow diagram of an example method for generating the prediction of moisture content in the fibreboard at the output of the drying stage of the fibreboard manufacturing process.
Figure 3 shows a flow diagram of an example method for modifying the setpoint associated to the input temperature of a dryer based on the prediction generated.
Figure 4 shows an example moisture content control system for controlling a fibre moisture content in a fibreboard manufacturing process.

### DESCRIPTION OF MODES OF EMBODIMENT OF THE INVENTION

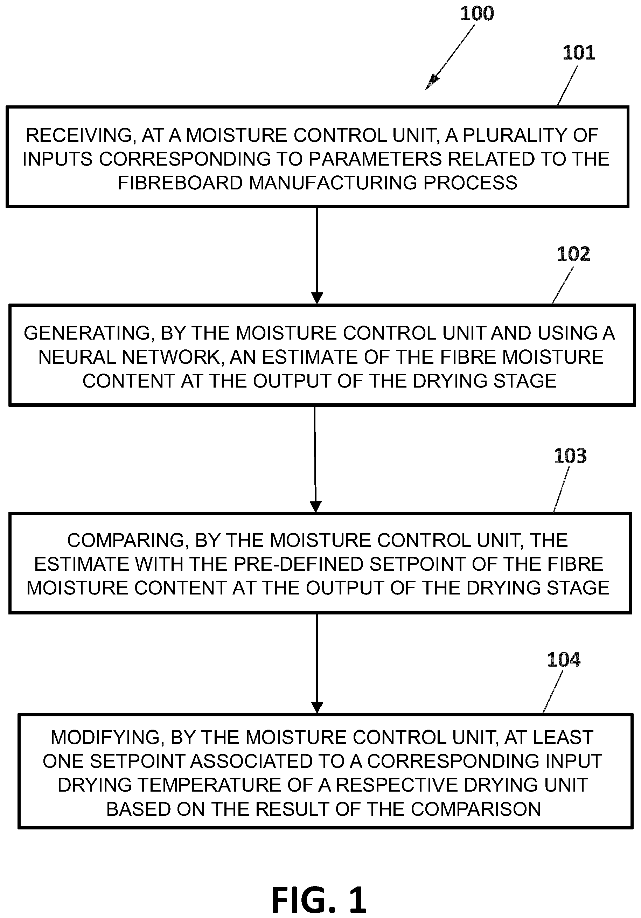

Figure 1 shows a flow diagram of an example method 100 for controlling moisture content in a fibreboard manufacturing process.

At step 101 of the method 100, the moisture control unit receives a plurality of inputs corresponding to parameters related to the fibreboard manufacturing process. These parameters are captured by a plurality of sensors located in different points of the fibreboard production line in the factory. By way of example, the sensors may be volumetric sensors, temperature sensors, pressure sensors, speed sensors, etc. The parameters captured by the plurality of sensors at least include the pre-defined setpoint of the fibre moisture content at the output of the drying stage of the fibreboard manufacturing process. Other parameters collected by the plurality of sensors may be humidity of the chips; the position of the rotating disc, power of the motors involved in the process, and opening of the valve of the defibrator; speed of the endless screws, level of fibre, residence time and pressure inside the digestor; amount of glue and other additives added at and vapour pressure inside the blowline; inlet and outlet temperatures, gas and air flows in the driers; external air humidity and temperature, etc.

The sensors may have wired connections with the moisture control unit or may implement non-wired connections such as Bluetooth or Wi-Fi connections with the moisture control unit.

At step 102 of the method 100, the moisture control unit, using a neural network that comprises at least one hidden neural network layer, generates a prediction of the fibre moisture content at the output of the drying stage that is based on the received inputs. This prediction is based on the inputs corresponding to parameters related to the drying stage of the fibreboard manufacturing process, i.e., parameters related to the drying units such as inlet and outlet temperatures, gas and air flows in the driers, etc., and at least one another parameter collected in a fibreboard manufacturing stage prior to the drying stage. This at least one another parameter may be one or more parameters collected from the digestion stage (e.g. speed of the endless screws), the defibrating stage (e.g., the position of the rotating disc), from the gluing stage (e.g., amount of additives added at the blowline) or any combination thereof.

At step 103 of the method 100, the moisture control unit compares the prediction generated with the pre-defined setpoint of the fibre moisture content at the output of the drying stage.

At step 104 of the method 100, the moisture control unit modifies at least one setpoint associated to a corresponding input drying temperature of a respective drying unit of the fibreboard manufacturing process based on the result of the comparison. Based on said comparison and when there is a difference between the predicted value and the setpoint established at the output of the drying unit, the moisture control unit may increase or decrease the setpoint associated to the corresponding input drying temperature. This method 100 is performed in real time. In addition, the moisture control unit optimizes the values of the modified setpoints of the input drying temperatures by considering respective pre-defined range for the corresponding input drying temperatures. The moisture control unit may determine several combinations of modified input drying temperatures and select the combination of modified input drying temperatures that, being within the pre-defined ranges of the respective input drying temperatures, optimizes the result. For example, the moisture control unit may consider an additional parameter, such a pre-established energy distribution between the drying units, and based on said additional parameter the moisture control unit may select the appropriate combinations of modified input drying temperatures for the drying units.

In this way, any deviation of the percentage of moisture content in the fibre with respect to the setpoint can be anticipated and consequently, the input temperatures of the dryers can be automatically optimized and modified. By modifying the setpoints associated to the input temperatures of the dryers, the temperature of the gasses being injected in the dryers can be modified by the PIDs associated to the sensors that measure the input temperature of the driers. This allows eliminating, or at least minimizing, the predicted deviation. Therefore, the method herein described provides a more homogeneous fibreboard production process from the point of view of moisture at the same time allows automatization of the process avoiding interactions with operators and installation of physical backup sensors.

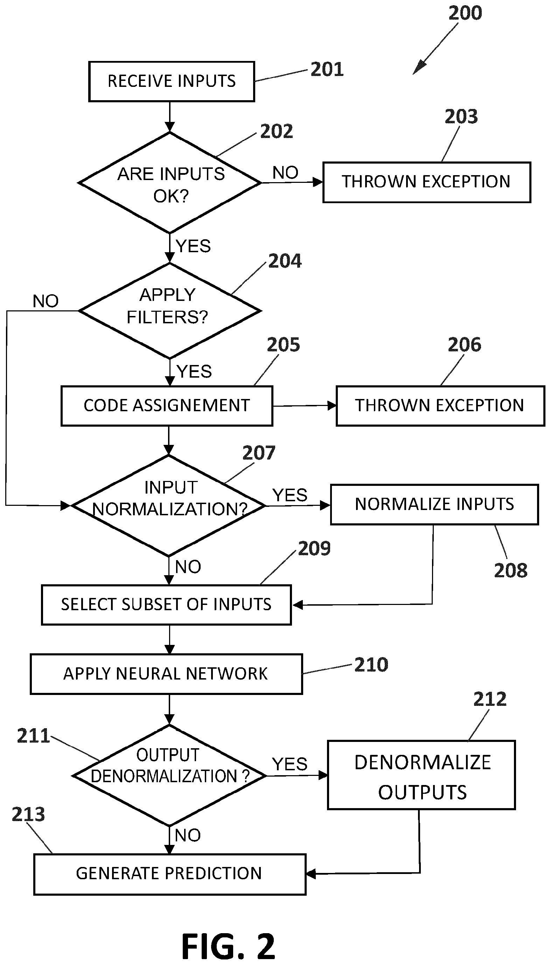

Figure 2 shows a flow diagram of an example method 200 for generating the prediction of moisture content in the fibreboard at the output of the drying stage of the fibreboard manufacturing process.

At step 201 of the method 200, the moisture control unit receives a plurality of inputs corresponding to parameters related to the fibreboard manufacturing process. These parameters are captured in real time by a plurality of sensors located in different points of the fibreboard production line in the factory.

At step 202 of the method 200, the moisture control unit checks whether the received inputs include the appropriate parameters to generate the prediction of the moisture content. In the event, the moisture control unit would detect the lack of an essential parameter, e.g., the input drying temperatures of a drying units of the fibreboard production line, for generating said prediction, then the moisture control unit may throw an exception 203 that would discard all the inputs received and exit the process.

At step 204 of the method 200, the moisture control unit determines whether some filters should be applied to the received inputs. These filters include policies that comprise error assignation rules for the inputs. Policies are applied by the moisture control unit to the plurality of inputs received, coined as case. To this case, the moisture control unit assigns 205 an error code "OK" (which is represented numerically as 99). Each error assignation rule is applied to a particular input or a subset of inputs of this case and the moisture control unit is configured to assign a numerical code to the case based on the corresponding error assignation rule. For example, an error assignation rule can comprise a first range and a second range for the particular input. The first range may correspond to parameter values having no operational interest while the second range may correspond to parameter values having operational interest and thus, being valid values. In such examples, when the parameter associated to the particular input is within the first range, the moisture control unit is configured to assign a specific numerical error code to the particular case between 0 and 98 depending on the severity of the error, if such specific numerical error is lower than the current stored numerical error for the particular case. When the parameter associated to the particular input is within the second range, the error code assigned to this particular case is not changed. After executing all the error assignation rules in the policy, if the case has a numerical code different of "OK", the case is marked as "Error" if the numerical value of the error code of the case is between 0 and 49, and as "Warning" if the value is between 50 and 98. If the case is marked as "Error", the moisture control unit may throw the exception 206, discard the plurality of inputs collected at that particular instant and return only this error code.

At step 207 of the method 200, the moisture control unit determines whether the inputs need to be normalised. The inputs may have to be normalised based on their scale values. For normalising the inputs, the moisture control unit applies pre-processing actions to the inputs. By normalizing the plurality of inputs, the input values are transformed to a common scale. Thus, when the scale values in which the inputs are received are different form each other, the moisture control unit normalizes 208 the inputs. Once the inputs have been normalized or when the moisture control unit determines that normalization is not required, the moisture control unit selects 209 a subset of inputs of the plurality of inputs and applies 210 an artificial neural network, e.g. an artificial deep neural network, to generate the prediction of the fibre moisture content at the output of the drying stage.

At step 211 of the method 200, the moisture control unit determines whether the output of the artificial neural network needs to be denormalized. The moisture control unit denormalizes 212 the output of the artificial neural network.

At step 213 of the method, generates the prediction of the fibre moisture content at the output of the drying stage.

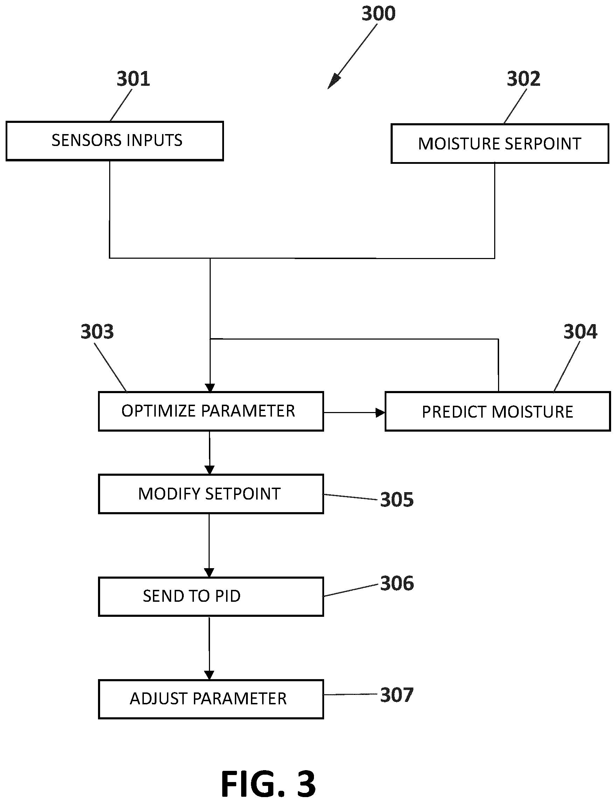

Figure 3 shows a flow diagram of an example method 300 for modifying the setpoint associated to the input temperature of a dryer based on the prediction generated.

The moisture control unit receives the plurality of inputs 301 from the sensors and the pre-defined moisture setpoint 302 and triggers the optimization 303 of the parameter(s) involved (e.g., the input drying temperatures). To perform this optimization 303, the moisture control unit compares the predicted value 304 (obtained as shown figure 2 using the received inputs 301) of fibre moisture content at the output of the drying stage, in other words, at the output of the last drying unit of the drying units of the fibreboard manufacturing process, with the setpoint 302 established for the fibre moisture content at the output of the drying stage. For example, the predicted value 304 for the fibre moisture content at the output of the drying stage may be 11% while the corresponding set point 302 may be 11.5%. If the difference (distance) between the predicted value and the setpoint is higher than a pre-defined threshold, e.g., 0.02, and the maximum number of allowed cycles has not been reached (e.g., 4) or other stopping criteria are not met, then the moisture control unit determines that the predicted value and the setpoint do not fit, compares this new distance with the distance calculated in a previous cycle and if lower, store this combination (combination of input drying temperatures) as the best solution and later, the moisture control unit modifies the proposed input drying temperatures and requests a new moisture prediction 304. The objective of this loop is to obtain the combination of input parameters (known as best case) that minimizes this distance (process known as optimisation). The optimisation can be executed using this cycle or using another techniques e.g., that generate a plurality of moisture predictions to select one that minimizes the distance between the prediction and the setpoint (the best case). When the difference between the predicted value and the setpoint is lower than a pre-defined threshold (for example, the predicted moisture content value is 11.49%) or the number or cycles is higher than the maximum number of allowed cycles or other stopping criteria are met, then the moisture control unit modifies 306 the previously established setpoint using the value of the setpoint in the stored best case.

This modified setpoint is sent 306 to the PID that is associated to the sensor that is monitoring the input temperature of the drying units. The PID, upon reception of the modified setpoint, adjusts 307 the input temperature of the drying units in order to reach the modified setpoint for the fibre moisture content oat the output of the drying stage. For example, the PID may instruct the flaps to decrease the opening by 1%.

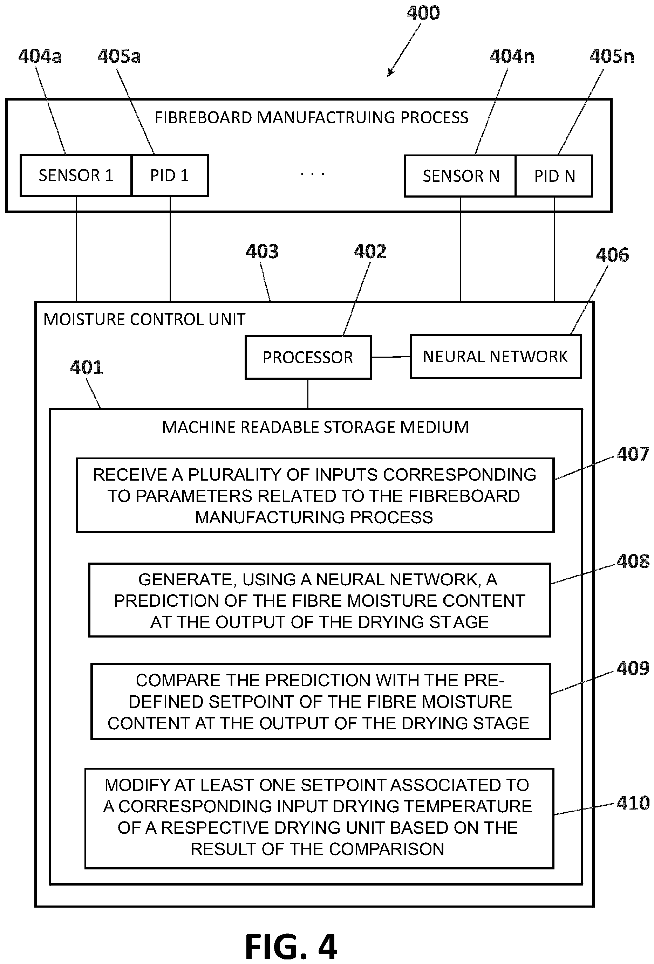

Figure 4 is a block diagram of an example moisture content control system 400 for controlling a fibre moisture content in a fibreboard manufacturing process in which a machine-readable storage medium 401 stores instructions to be executed by a processor 402 of the moisture control unit 403. It should be understood that the moisture content control system 400 depicted in FIG. 4 may include additional components and that some of the components described herein may be removed and/or modified without departing from a scope of the example moisture content control system 400. Additionally, implementation of moisture content control system 400 is not limited to such example. It should also be understood that moisture control unit 403 may represent a combination of hardware and software logic controlling a fibre moisture content in a fibreboard manufacturing process by using a set of sensors 404a-n and a set of PIDs 405-n. Each sensor 404a-n is configured to monitor a particular parameter of the fibreboard production line 406. Each PID 405a-n is associated to a particular sensor 404a-n and is configured to adjust the parameter the particular sensor 404a-n the PID 405a-n is associated to is monitoring. The PIDs 405-n adjust the parameter to a setpoint the parameter is associated to. Each pair sensor-PID is located in a different point of the fibreboard production line 406 in the factory to monitor and adjust a different parameter of the process.

The moisture control unit 403 is depicted as including a machine-readable storage medium 401 and a processor 402. The sensor 404a-n and PIDs 405a-n may have wired connections with the moisture control unit 403 or may implement non-wired connections such as Bluetooth or Wi-Fi connections.

In such example, the moisture control unit 403 receives a plurality of inputs corresponding to parameters related to the fibreboard manufacturing process. The inputs are received 407 from the set of sensors 404a-n at a particular instant. Then, the moisture control unit 403, using a neural network 411 that comprises at least one neural network layer, generates 408 a prediction of the fibre moisture content at the output of the drying stage that is based on the received inputs. This prediction is based on the inputs corresponding to parameters related to the drying stage of the fibreboard manufacturing process, i.e., parameters related to the drying units such as inlet and outlet temperatures, gas and air flows in the driers, etc., and at least one another parameter collected in a fibreboard manufacturing stage prior to the drying stage. The moisture control unit 403 further compares 409 the prediction generated with the pre-defined setpoint of the fibre moisture content at the output of the drying stage, and modifies 410 at least one setpoint associated to a corresponding input drying temperature of a respective drying unit of the fibreboard manufacturing process based on the result of the comparison.

The moisture control unit 403 may include hardware and software logic to perform the functionalities described above in relation to instructions 407-410. The machine-readable storage medium 401 may be located either in the computing device executing the machine-readable instructions, or remote from but accessible to the computing device (e.g., via a computer network) for execution.

As used herein, a "machine-readable storage medium" may be any electronic, magnetic, optical, or other physical storage apparatus to contain or store information such as executable instructions, data, and the like. For example, any machine-readable storage medium described herein may be any of Random Access Memory (RAM), volatile memory, non-volatile memory, flash memory, a storage drive (e.g., a hard drive), a solid state drive, any type of storage disc (e.g., a compact disc, a DVD, etc.), and the like, or a combination thereof. Further, any machine-readable storage medium described herein may be non-transitory. In examples described herein, a machine-readable storage medium or media may be part of an article (or article of manufacture). An article or article of manufacture may refer to any manufactured single component or multiple components.

Examples and embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Examples and embodiments of the subject matter described in this specification can be implemented as one or more computer programs, i.e., one or more modules of computer program instructions encoded on a tangible non transitory storage medium for execution by, or to control the operation of, data processing apparatus.

Neural networks can be implemented and deployed using a machine learning framework, e.g., a TensorFlow framework, a Microsoft Cognitive Toolkit framework, an Apache Singa framework, or an Apache MXNet framework. Examples of the subject matter described herein can be implemented in a computing system that includes a back end component, e.g., as a data server, or that includes a middleware component, e.g., an application server, or that includes a front end component, e.g., a client computer having a graphical user interface, a web browser, or an app through which a user can interact with an implementation of the subject matter described in this specification, or any combination of one or more such back end, middleware, or front end components. The components of the system can be interconnected by any form or medium of digital data communication, e.g., a communication network. Examples of communication networks include a local area network (LAN) and a wide area network (WAN), e.g., the Internet.

Data processing apparatus for implementing machine learning models can also include, for example, special-purpose hardware accelerator units for processing common and compute-intensive parts of machine learning training or production, i.e., inference, workloads.

In this text, the word "comprises" and its variants (such as "comprising", etc.) are not to be interpreted in an exclusionary manner, that is to say, they do not exclude the possibility that what is described includes other elements, steps etc.

In addition, the invention is not limited to the specific embodiments which have been described, but also covers, for example the variants which can be realised by the person skilled in the art (for example, in terms of the selection of materials, dimensions, components, configuration, etc.), within the scope of the appended set of claims.

## Claims

1. A moisture content control system (400) for controlling a fibre moisture content in a fibreboard manufacturing process, comprising:
a plurality of sensors (404a-n), each sensor being configured to monitor a respective parameter of the fibreboard manufacturing process;
a plurality of feedback loop controllers, each feedback loop controller being configured to adjust a particular parameter of the fibreboard manufacturing process based on a difference between a pre-defined setpoint associated to the particular parameter and a current value of the particular parameter; and
**characterized in that** the moisture content control system (400) comprises a moisture control unit (403) configured to:
receive (407) a plurality of inputs, the plurality of inputs corresponding to the parameters monitored by the plurality of sensors (404a-n) and comprising a pre-defined setpoint of the fibre moisture content at the output of a fibre drying stage of the fibreboard manufacturing process;
generate (408), using a neural network that comprises at least one hidden neural network layer, a prediction of the fibre moisture content at the output of the fibre drying stage, the neural network using as inputs the monitored parameters corresponding to the fibre drying stage and at least one another parameter of a fibreboard manufacturing stage prior to the fibre drying stage;
compare (409) the prediction with the pre-defined setpoint of the fibre moisture content at the output of the fibre drying stage; and
modify (410) at least one setpoint associated to a corresponding input drying temperature of a respective drying unit of the fibre drying stage of the fibreboard manufacturing process based on the result of the comparison.

2. The moisture content control system of claim 1, wherein the moisture control unit is configured to optimize the at least one setpoint associated to a corresponding input drying temperature by modifying the at least one setpoint within a pre-defined range for the corresponding input drying temperature.

3. The moisture content control system of claim 2, wherein the moisture control unit is configured to optimize a setpoint associated to a first input drying temperature of a first drying unit and a setpoint associated to a second drying temperature of a second drying unit by modifying the setpoint associated to the first input drying temperature within a first pre-defined range for the first input drying temperature and the setpoint associated to the second input drying temperature within a second pre-defined range for the second input drying temperature.

4. The moisture content control system of any one of the preceding claims, wherein the moisture control unit is configured to optimize at least one of the setpoints associated to the first input drying temperature of the first drying unit and the setpoint associated to the second input drying temperature of the second drying unit based on the result of the comparison and on at least one additional parameter, preferably, a distance between a pre-defined energy distribution between the first drying unit and the second drying unit and a current predicted value for the energy distribution.

5. The moisture content control system of any one of the preceding claims, wherein the feedback loop controllers associated to the at least one input drying temperature are configured to adjust the at least one input drying temperature of the respective drying unit based on the difference between the modified setpoint and the current value of the corresponding input drying temperature.

6. The moisture content control system of any one of the preceding claims, wherein the neural network is a non-lineal regression model.

7. A method (100) for controlling fibre moisture content in a fibreboard manufacturing process, the fibreboard manufacturing process comprising a fibre drying stage, **characterized in that** the method comprising the steps of:
receiving (101), at a moisture control unit, a plurality of inputs corresponding to parameters related to the fibreboard manufacturing process, the parameters being captured by a plurality of sensors and comprising a pre-defined setpoint of the fibre moisture content at the output of the fibre drying stage;
generating (102), by the moisture control unit and using a neural network that comprises at least one hidden neural network layer, a prediction of the fibre moisture content at the output of the drying stage, the neural network using as inputs the parameters related to the fibre drying stage and at least one another parameter of a fibreboard manufacturing stage prior to the fibre drying stage;
comparing (103), by the moisture control unit, the prediction with the pre-defined setpoint of the fibre moisture content at the output of the fibre drying stage; and
modifying (104), by the moisture control unit, a setpoint associated to at least one input drying temperature of a respective drying unit of the fibre drying stage of the fibreboard manufacturing process based on the result of the comparison.

8. The method for controlling fibre moisture content of claim 7, comprising optimizing, by the moisture control unit, the at least one setpoint associated to a corresponding input drying temperature by modifying the at least one setpoint within a pre-defined range for the corresponding input drying temperature.

9. The method for controlling fibre moisture content of claim 8, comprising optimizing a setpoint associated to a first input drying temperature of a first drying unit and a setpoint associated to a second drying temperature of a second drying unit by modifying the setpoint associated to the first input drying temperature within a first pre-defined range for the first input drying temperature and the setpoint associated to the second input drying temperature within a second pre-defined range for the second input drying temperature.

10. The method for controlling fibre moisture content of any one of claims 7 to 9, comprising:
adjusting, by a first feedback loop controller associated to a first input drying temperature of a first drying unit, the first input drying temperature based on a difference between the modified setpoint associated to the first input drying temperature and a current value of the first input drying temperature; and
adjusting, by a second feedback loop controller associated to a second input drying temperature of a second drying unit, the second input drying temperature based on a difference between the modified setpoint associated to the second input drying temperature and a current value of the second input drying temperature.

11. The method for controlling fibre moisture content of any one of claims 7 to 10, comprising optimizing at least one of the setpoint associated to a first input drying temperature of the first drying unit and the setpoint associated to the second input drying temperature of the second drying unit based on the result of the comparison and on at least one additional parameter, preferably, a distance between a pre-defined energy distribution between the first drying unit and the second drying unit and a current predicted value for the energy distribution.

12. The method for controlling fibre moisture content of any one of claims 7 to 11, comprising:
selecting a subset of inputs of the plurality of inputs; and
generating the prediction of the fibre moisture content at the output of the fibre drying stage based on the subset of inputs.

13. The method for controlling fibre moisture content of any one of claims 7 to 12, comprising:
comparing the prediction with a number of fibre moisture content measures previously collected by a sensor at the output of the fibre drying stage of the fibreboard manufacturing process;
determining a deviation of the sensor based on the result of the comparison; and
calibrating the prediction based on the deviation.

14. The method for controlling fibre moisture content of any one of claims 7 to 13, comprising executing the method periodically at particular time intervals.

15. The method for controlling fibre moisture content of any one of claims 7 to 14, wherein the method is performed in real time.

## Patentansprüche

1. Feuchtigkeitsgehaltsteuerungssystem (400) zum Steuern eines Faserfeuchtigkeitsgehalts in einem Faserplattenherstellungsprozess, umfassend:
eine Vielzahl von Sensoren (404a-n), wobei jeder Sensor konfiguriert ist, um einen jeweiligen Parameter des Faserplattenherstellungsprozesses zu überwachen;
eine Vielzahl von Rückkopplungsschleifensteuerungen, wobei jede Rückkopplungsschleifensteuerung konfiguriert ist, um einen bestimmten Parameter des Faserplattenherstellungsprozesses basierend auf einer Differenz zwischen einem vordefinierten Sollwert, der dem bestimmten Parameter zugeordnet ist, und einem aktuellen Wert des bestimmten Parameters einzustellen; und
**dadurch gekennzeichnet, dass** das Feuchtigkeitsgehaltsteuerungssystem (400) eine Feuchtigkeitssteuereinheit (403) umfasst, die konfiguriert ist zum:
Empfangen (407) einer Vielzahl von Eingängen, wobei die Vielzahl von Eingängen den Parametern entspricht, die von der Vielzahl von Sensoren (404a-n) überwacht werden und einen vordefinierten Sollwert des Faserfeuchtigkeitsgehalts am Ausgang einer Fasertrocknungsstufe des Faserplattenherstellungsprozesses umfassen;
Erzeugen (408), unter Verwendung eines neuronalen Netzwerks, das mindestens eine verborgene neuronale Netzschicht umfasst, einer Vorhersage des Faserfeuchtigkeitsgehalts am Ausgang der Fasertrocknungsstufe, wobei das neuronale Netzwerk als Eingänge die überwachten Parameter, die der Fasertrocknungsstufe entsprechen, und mindestens einen anderen Parameter einer Faserplattenherstellungsstufe vor der Fasertrocknungsstufe verwendet;
Vergleichen (409) der Vorhersage mit dem vordefinierten Sollwert des Faserfeuchtigkeitsgehalts am Ausgang der Fasertrocknungsstufe; und
Modifizieren (410) mindestens eines Sollwerts, der einer entsprechenden Eingangstrocknungstemperatur einer jeweiligen Trocknungseinheit der Fasertrocknungsstufe des Faserplattenherstellungsprozesses basierend auf dem Ergebnis des Vergleichs zugeordnet ist.

2. Feuchtigkeitsgehaltsteuerungssystem nach Anspruch 1, wobei die Feuchtigkeitssteuereinheit konfiguriert ist, um den mindestens einen Sollwert, der einer entsprechenden Eingangstrocknungstemperatur zugeordnet ist, durch Modifizieren des mindestens einen Sollwerts innerhalb eines vordefinierten Bereichs für die entsprechende Eingangstrocknungstemperatur zu optimieren.

3. Feuchtigkeitsgehaltsteuerungssystem nach Anspruch 2, wobei die Feuchtigkeitssteuereinheit konfiguriert ist, um einen Sollwert, der einer ersten Eingangstrocknungstemperatur einer ersten Trocknungseinheit zugeordnet ist, und einen Sollwert, der einer zweiten Trocknungstemperatur einer zweiten Trocknungseinheit zugeordnet ist, durch Modifizieren des der ersten Eingangstrocknungstemperatur zugeordneten Sollwerts innerhalb eines ersten vordefinierten Bereichs für die erste Eingangstrocknungstemperatur und des der zweiten Eingangstrocknungstemperatur innerhalb eines zweiten vordefinierten Bereichs für die zweite Eingangstrocknungstemperatur zugeordneten Sollwerts zu optimieren.

4. Feuchtigkeitsgehaltsteuerungssystem nach einem der vorstehenden Ansprüche, wobei die Feuchtigkeitssteuereinheit konfiguriert ist, um mindestens einen der Sollwerte, die der ersten Eingangstrocknungstemperatur der ersten Trocknungseinheit zugeordnet sind, und den Sollwert, der der zweiten Eingangstrocknungstemperatur der zweiten Trocknungseinheit zugeordnet ist, basierend auf dem Ergebnis des Vergleichs und mindestens einem zusätzlichen Parameter, vorzugsweise einem Abstand zwischen einer vordefinierten Energieverteilung zwischen der ersten Trocknungseinheit und der zweiten Trocknungseinheit und einem aktuellen vorhergesagten Wert für die Energieverteilung, zu optimieren.

5. Feuchtigkeitsgehaltsteuerungssystem nach einem der vorstehenden Ansprüche, wobei die Rückkopplungsschleifensteuerungen, die der mindestens einen Eingangstrocknungstemperatur zugeordnet sind, konfiguriert sind, um die mindestens eine Eingangstrocknungstemperatur der jeweiligen Trocknungseinheit basierend auf der Differenz zwischen dem modifizierten Sollwert und dem Istwert der entsprechenden Eingangstrocknungstemperatur einzustellen.

6. Feuchtigkeitsgehaltsteuerungssystem nach einem der vorstehenden Ansprüche, wobei das neuronale Netzwerk ein nicht-lineares Regressionsmodell ist.

7. Verfahren (100) zum Steuern des Faserfeuchtigkeitsgehalts in einem Faserplattenherstellungsprozess, wobei der Faserplattenherstellungsprozess eine Fasertrocknungsstufe umfasst, **dadurch gekennzeichnet, dass** das Verfahren die folgenden Schritte umfasst:
Empfangen (101), an einer Feuchtigkeitssteuereinheit, einer Vielzahl von Eingängen, die den Parametern entsprechen, die sich auf den Faserplattenherstellungsprozess beziehen, wobei die Parameter von einer Vielzahl von Sensoren erfasst werden und einen vordefinierten Sollwert des Faserfeuchtigkeitsgehalts am Ausgang der Fasertrocknungsstufe umfassen;
Erzeugen (102), durch die Feuchtigkeitssteuereinheit und unter Verwendung eines neuronalen Netzwerks, das mindestens eine verborgene neuronale Netzschicht umfasst, einer Vorhersage des Faserfeuchtigkeitsgehalts am Ausgang der Trocknungsstufe, wobei das neuronale Netzwerk als Eingänge die Parameter in Bezug auf die Fasertrocknungsstufe und mindestens einen anderen Parameter einer Faserplattenherstellungsstufe vor der Fasertrocknungsstufe verwendet;
Vergleichen (103), durch die Feuchtigkeitssteuereinheit, der Vorhersage mit dem vordefinierten Sollwert des Faserfeuchtigkeitsgehalts am Ausgang der Fasertrocknungsstufe; und
Modifizieren (104), durch die Feuchtigkeitssteuereinheit, eines Sollwerts, der mindestens einer Eingangstrocknungstemperatur einer jeweiligen Trocknungseinheit der Fasertrocknungsstufe des Faserplattenherstellungsprozesses zugeordnet ist, basierend auf dem Ergebnis des Vergleichs.

8. Verfahren zum Steuern des Faserfeuchtigkeitsgehalts nach Anspruch 7, umfassend ein Optimieren, durch die Feuchtigkeitssteuereinheit, des mindestens einen Sollwerts, der einer entsprechenden Eingangstrocknungstemperatur zugeordnet ist, durch Modifizieren des mindestens einen Sollwerts innerhalb eines vordefinierten Bereichs für die entsprechende Eingangstrocknungstemperatur.

9. Verfahren zum Steuern des Faserfeuchtigkeitsgehalts nach Anspruch 8, umfassend das Optimieren eines Sollwerts, der einer ersten Eingangstrocknungstemperatur einer ersten Trocknungseinheit zugeordnet ist, und eines Sollwerts, der einer zweiten Trocknungstemperatur einer zweiten Trocknungseinheit zugeordnet ist, durch Modifizieren des der ersten Eingangstrocknungstemperatur zugeordneten Sollwerts innerhalb eines ersten vordefinierten Bereichs für die erste Eingangstrocknungstemperatur und des der zweiten Eingangstrocknungstemperatur innerhalb eines zweiten vordefinierten Bereichs für die zweite Eingangstrocknungstemperatur zugeordneten Sollwerts.

10. Verfahren zum Steuern des Faserfeuchtigkeitsgehalts nach einem der Ansprüche 7 bis 9, umfassend:
Anpassen, durch eine erste Rückkopplungsschleifensteuerung, die einer ersten Eingangstrocknungstemperatur einer ersten Trocknungseinheit zugeordnet ist, der ersten Eingangstrocknungstemperatur basierend auf einer Differenz zwischen dem modifizierten Sollwert, der der ersten Eingangstrocknungstemperatur zugeordnet ist, und einem Istwert der ersten Eingangstrocknungstemperatur; und
Anpassen, durch eine zweite Rückkopplungsschleifensteuerung, die einer zweiten Eingangstrocknungstemperatur einer zweiten Trocknungseinheit zugeordnet ist, der zweiten Eingangstrocknungstemperatur basierend auf einer Differenz zwischen dem modifizierten Sollwert, der der zweiten Eingangstrocknungstemperatur zugeordnet ist, und einem Istwert der zweiten Eingangstrocknungstemperatur.

11. Verfahren zum Steuern des Faserfeuchtigkeitsgehalts nach einem der Ansprüche 7 bis 10, umfassend das Optimieren mindestens eines von dem Sollwert, der einer ersten Eingangstemperatur der ersten Trocknungseinheit zugeordnet ist, und dem Sollwert, der der zweiten Eingangstemperatur der zweiten Trocknungseinheit zugeordnet ist, basierend auf dem Ergebnis des Vergleichs und auf mindestens einem zusätzlichen Parameter, vorzugsweise einem Abstand zwischen einer vordefinierten Energieverteilung zwischen der ersten Trocknungseinheit und der zweiten Trocknungseinheit und einem aktuellen vorhergesagten Wert für die Energieverteilung.

12. Verfahren zum Steuern des Faserfeuchtigkeitsgehalts nach einem der Ansprüche 7 bis 11, umfassend:
Auswählen einer Teilmenge von Eingängen aus der Vielzahl von Eingängen; und
Erzeugen der Vorhersage des Faserfeuchtigkeitsgehalts am Ausgang der Fasertrocknungsstufe basierend auf der Teilmenge von Eingängen.

13. Verfahren zum Steuern des Faserfeuchtigkeitsgehalts nach einem der Ansprüche 7 bis 12, umfassend:
Vergleichen der Vorhersage mit einer Anzahl von zuvor von einem Sensor gesammelten Faserfeuchtigkeitsgehaltmessungen am Ausgang der Fasertrocknungsstufe des Faserplattenherstellungsprozesses;
Bestimmen einer Abweichung des Sensors basierend auf dem Ergebnis des Vergleichs; und
Kalibrieren der Vorhersage basierend auf der Abweichung.

14. Verfahren zum Steuern des Faserfeuchtigkeitsgehalts nach einem der Ansprüche 7 bis 13, umfassend das Ausführen des Verfahrens periodisch in bestimmten Zeitintervallen.

15. Verfahren zum Steuern des Faserfeuchtigkeitsgehalts nach einem der Ansprüche 7 bis 14, wobei das Verfahren in Echtzeit durchgeführt wird.

## Revendications

1. Système de régulation de teneur en humidité (400) pour réguler la teneur en humidité des fibres dans un procédé de fabrication de panneaux de fibres, comprenant :
une pluralité de capteurs (404a-n), chaque capteur étant configuré pour surveiller un paramètre respectif du procédé de fabrication de panneaux de fibres ;
une pluralité de contrôleurs à boucle de rétroaction, chaque contrôleur à boucle de rétroaction étant configuré pour ajuster un paramètre particulier du procédé de fabrication de panneaux de fibres sur la base de la différence entre un point de consigne prédéfini associé au paramètre particulier et la valeur actuelle du paramètre particulier ; et
**caractérisé en ce que** le système de régulation de teneur en humidité (400) comprend une unité de régulation d'humidité (403) configurée pour :
recevoir (407) une pluralité d'entrées, la pluralité d'entrées correspondant aux paramètres surveillés par la pluralité de capteurs (404a-n) et comprenant un point de consigne prédéfini de la teneur en humidité des fibres à la sortie d'une phase de séchage de fibres du procédé de fabrication de panneaux de fibres ;
générer (408), par utilisation d'un réseau neuronal qui comprend au moins une couche de réseau neuronal masquée, une prédiction de la teneur en humidité des fibres à la sortie de la phase de séchage de fibres, le réseau neuronal utilisant en tant qu'entrées les paramètres surveillés correspondant à la phase de séchage de fibres et au moins un autre paramètre d'une phase de fabrication de panneaux de fibres avant la phase de séchage de fibres ;
comparer (409) la prédiction avec le point de consigne prédéfini de la teneur en humidité des fibres à la sortie de la phase de séchage de fibres ; et
modifier (410) au moins un point de consigne associé à une température de séchage d'entrée correspondante d'une unité de séchage respective de la phase de séchage de fibres du procédé de fabrication de panneaux de fibres sur la base du résultat de la comparaison.

2. Système de régulation de teneur en humidité selon la revendication 1, dans lequel l'unité de régulation d'humidité est configurée pour optimiser l'au moins un point de consigne associé à une température de séchage d'entrée correspondante par modification de l'au moins un point de consigne à l'intérieur d'une plage prédéfinie pour la température de séchage d'entrée correspondante.

3. Système de régulation de teneur en humidité selon la revendication 2, dans lequel l'unité de régulation d'humidité est configurée pour optimiser un point de consigne associé à une première température de séchage d'entrée d'une première unité de séchage et un point de consigne associé à une deuxième température de séchage d'entrée d'une deuxième unité de séchage par modification du point de consigne associé à la première température de séchage d'entrée à l'intérieur d'une première plage prédéfinie pour la première température de séchage d'entrée et du point de consigne associé à la deuxième température de séchage d'entrée à l'intérieur d'une deuxième plage prédéfinie pour la deuxième température de séchage d'entrée.

4. Système de régulation de teneur en humidité selon l'une quelconque des revendications précédentes, dans lequel l'unité de régulation d'humidité est configurée pour optimiser au moins l'un parmi le point de consigne associé à la première température de séchage d'entrée de la première unité de séchage et le point de consigne associé à la deuxième température de séchage d'entrée de la deuxième unité de séchage sur la base du résultat de la comparaison et sur la base d'au moins un paramètre additionnel, de préférence la distance entre la distribution d'énergie prédéfinie entre la première unité de séchage et la deuxième unité de séchage et la valeur prédite actuelle pour la distribution d'énergie.

5. Système de régulation de teneur en humidité selon l'une quelconque des revendications précédentes, dans lequel les contrôleurs à boucle de rétroaction associés à l'au moins une température de séchage d'entrée sont configurés pour ajuster l'au moins une température de séchage d'entrée de l'unité de séchage respective sur la base de la différence entre le point de consigne modifié et la valeur actuelle de la température de séchage d'entrée correspondante.

6. Système de régulation de teneur en humidité selon l'une quelconque des revendications précédentes, dans lequel le réseau neuronal est un modèle de régression non linéaire.

7. Méthode (100) pour réguler la teneur en humidité des fibres dans un procédé de fabrication de panneaux de fibres, le procédé de fabrication de panneaux de fibres comprenant une phase de séchage de fibres, **caractérisée en ce que** la méthode comprend les étapes de :
réception (101), au niveau d'une unité de régulation d'humidité, d'une pluralité d'entrées correspondant à des paramètres liés au procédé de fabrication de panneaux de fibres, les paramètres étant capturés par une pluralité de capteurs et comprenant un point de consigne prédéfini de la teneur en humidité des fibres à la sortie de la phase de séchage de fibres ;
génération (102), par l'unité de régulation d'humidité et avec l'utilisation d'un réseau neuronal qui comprend une couche de réseau neuronal masquée, d'une prédiction de la teneur en humidité des fibres à la sortie de la phase de séchage, le réseau neuronal utilisant en tant qu'entrées les paramètres associés à la phase de séchage de fibres et au moins un autre paramètre d'une phase de fabrication de panneaux de fibres avant la phase de séchage de fibres ;
comparaison (103), par l'unité de régulation d'humidité, de la prédiction avec le point de consigne prédéfini de la teneur en humidité des fibres à la sortie de la phase de séchage de fibres ; et
la modification (104), par l'unité de régulation d'humidité, d'un point de consigne associé à au moins une température de séchage d'entrée d'une unité de séchage respective de la phase de séchage de fibres du procédé de fabrication de panneaux de fibres sur la base du résultat de la comparaison.

8. Méthode pour réguler la teneur en humidité des fibres selon la revendication 7, comprenant l'optimisation, par l'unité de régulation d'humidité, de l'au moins un point de consigne associé à une température de séchage d'entrée correspondante par modification de l'au moins un point de consigne à l'intérieur d'une plage prédéfinie pour la température de séchage d'entrée correspondante.

9. Méthode pour réguler la teneur en humidité des fibres selon la revendication 8, comprenant l'optimisation d'un point de consigne associé à une première température de séchage d'entrée d'une première unité de séchage et d'un point de consigne associé à une deuxième température de séchage d'une deuxième unité de séchage par modification du point de consigne associé à la première température de séchage d'entrée à l'intérieur d'une première plage prédéfinie pour la première température de séchage d'entrée et du point de consigne associé à la deuxième température de séchage d'entrée à l'intérieur d'une deuxième plage prédéfinie pour la deuxième température de séchage d'entrée.

10. Méthode pour réguler la teneur en humidité des fibres selon l'une quelconque des revendications 7 à 9, comprenant :
l'ajustement, par un premier contrôleur à boucle de rétroaction associé à une première température de séchage d'entrée d'une première unité de séchage, de la première température de séchage d'entrée sur la base de la différence entre le point de consigne modifié associé à la première température de séchage d'entrée et la valeur actuelle de la première température de séchage d'entrée ; et
l'ajustement, par un deuxième contrôleur à boucle de rétroaction associé à une deuxième température de séchage d'entrée d'une deuxième unité de séchage, de la deuxième température de séchage d'entrée sur la base de la différence entre le point de consigne modifié associé à la deuxième température de séchage d'entrée et la valeur actuelle de la deuxième température de séchage d'entrée.

11. Méthode pour réguler la teneur en humidité des fibres selon l'une quelconque des revendications 7 à 10, comprenant l'optimisation d'au moins l'un parmi le point de consigne associé à une première température de séchage d'entrée de la première unité de séchage et le point de consigne associé à la deuxième température de séchage d'entrée de la deuxième unité de séchage sur la base du résultat de la comparaison et sur la base d'au moins un paramètre additionnel, de préférence la distance entre la distribution d'énergie prédéfinie entre la première unité de séchage et la deuxième unité de séchage et la valeur prédite actuelle pour la distribution d'énergie.

12. Méthode pour réguler la teneur en humidité des fibres selon l'une quelconque des revendications 7 à 11, comprenant :
la sélection d'un sous-ensemble d'entrées parmi la pluralité d'entrées ; et
la génération de la prédiction de la teneur en humidité des fibres à la sortie de la phase de séchage de fibres sur la base du sous-ensemble d'entrées.

13. Méthode pour réguler la teneur en humidité des fibres selon l'une quelconque des revendications 7 à 12, comprenant :
la comparaison de la prédiction avec un certain nombre de mesures de teneur en humidité des fibres collectées antérieurement par un capteur à la sortie de la phase de séchage de fibres du procédé de fabrication de panneaux de fibres ;
la détermination d'un écart du capteur sur la base du résultat de la comparaison ; et
l'étalonnage de la prédiction sur la base de l'écart.

14. Méthode pour réguler la teneur en humidité des fibres selon l'une quelconque des revendications 7 à 13, comprenant l'exécution de la méthode périodiquement à des intervalles de temps particuliers.

15. Méthode pour réguler la teneur en humidité des fibres selon l'une quelconque des revendications 7 à 14, laquelle méthode est mise en oeuvre en temps réel.
